# EUROPÄISCHE PATENTSCHRIFT

(11) **EP 0 303 073 B1**
(45) Veröffentlichungstag und Bekanntmachung des Hinweises auf die Patenterteilung: **24.03.1993**
(21) Anmeldenummer: 88111646.1
(22) Anmeldetag: 20.07.1988
(51) Int. Cl.: B60T 8/22, B60T 8/18, B60T 8/26

(54) **Lastabhängige Bremskraftregeleinrichtung**
Load-dependent brake force regulating installation
Installation de réglage de force de freinage en fonction de la charge

(30) Priorität: 08.08.1987 DE 8710867 U
(43) Veröffentlichungstag der Anmeldung: 15.02.1989
(73) Patentinhaber: ROBERT BOSCH GMBH, 70442 Stuttgart (DE)
(72) Erfinder: Deja, Siegmund, Ing., D-7000 Stuttgart 40 (DE); Gassmann, Heiner, Ing., D-7300 Esslingen 1 (DE)

(56) Entgegenhaltungen:
- DE-A- 2 048 965
- DE-U- 1 851 819

## Beschreibung

### Stand der Technik

Die Erfindung geht aus von einer lastabhängigen Bremskraftregeleinrichtung nach der Gattung des Anspruchs 1.

Eine lastabhängige Bremskraftregeleinrichtung mit einer eine Kolbenanordnung und eine Kolbenstange aufweisenden pneumatischen Abtastvorrichtung ist bekannt (DE-A-2 048 965). Die Kolbenstange besitzt einen Zahnstangenabschnitt. Mit diesem steht ein Ritzel auf einer Welle eines als Signalgeber dienenden Dreh-Potentiometers im Eingriff. Die Längsachsen von Kolbenstange bzw. Zahnstangenabschnitt sowie Potentiometerwelle verlaufen rechtwinklig zueinander in verschiedenen Ebenen. Der Zahnstangenabschnitt und das Ritzel bilden einen mit Spiel behafteten Zahntrieb, der eine lineare Bewegung der Kolbenstange in eine Drehbewegung der Potentiometerwelle umwandelt. Die fehlende Spielfreiheit des Zahntriebes führt zu Übertragungsfehlern zwischen Eingangssignalen der Abtastvorrichtung und Ausgangssignalen des Signalgebers.

Eine Anordnung zur drehspielfreien Verbindung einer Welle mit einer gleichachsig angeordneten Radnabe ist gleichfalls bekannt (DE-U-1 851 819). Hierzu ist die Welle mit Abflachungen und die Nabe mit Schlitzen versehen. Zwischen Welle und Habe sind gewellte Blattfedern eingefügt, welche sich mit Vorspannung sowohl an den Abflachungen als auch an den Seitenflächen der Schlitze abstützen.

### Vorteile der Erfindung

Die lastabhängige Bremskraftregeleinrichtung mit den kennzeichnenden Merkmalen des Hauptanspruchs hat demgegenüber den Vorteil, daß durch die Anordnung von Abtastwelle und Potentiometer der konstruktive Aufbau des Geräts vereinfacht wird und daß kein Spiel zwischen der Abtastwelle und der Potentiometerwelle besteht.

Damit ist eine sehr genaue Übertragung von Eingangs- zu Ausgangssignalen gewährleistet.

### Zeichnung

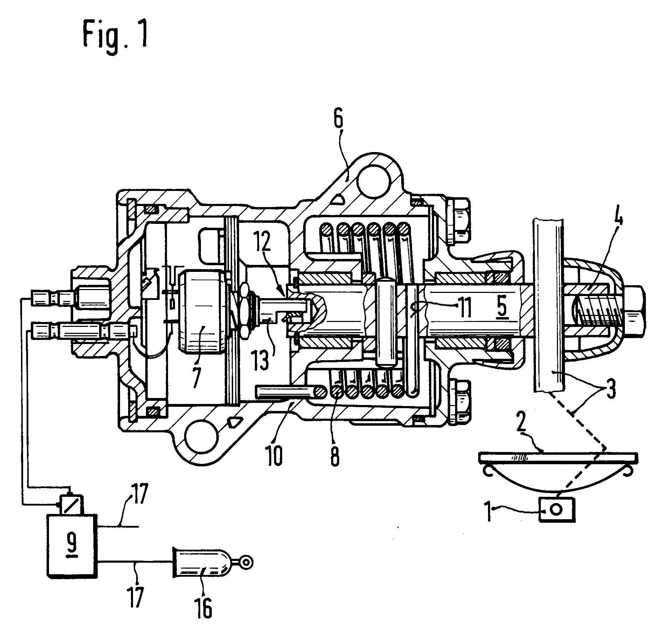

Ein Ausführungsbeispiel der Erfindung ist in der Zeichnung dargestellt und in der nachfolgenden Beschreibung näher erläutert. Es zeigen: Figur 1 die Abtastvorrichtung mit dem Signalgeber, Figur 2 einen Schnitt durch die Abtastwelle und Figur 3 einen Schnitt durch die Potentiometerwelle in dem Bereich von deren Abflachung.

### Beschreibung des Ausführungsbeispiels

Eine lastabhängige Bremskraftregeleinrichtung besitzt eine Abtastvorrichtung für den bei Lastveränderungen wechselnden Abstand zwischen einer Fahrzeugachse 1 und einem Fahrzeug-Aufbau 2. Diese Abtastvorrichtung ist als Hebel 3 ausgebildet, der auf dem Ende 4 einer Abtastwelle 5 sitzt und diese verdrehen kann.

Die Abtastwelle 5 wird von einem Gehäuse 6 aufgenommen, das auch noch ein Drehpotentiometer 7 und eine Rückstellfeder 8 aufnimmt. Letztere umgibt die Abtastwelle 5 und ist mit ihrem einen Ende in eine Gehäusewand 10 und mit ihrem anderen Ende in eine Diametral-Bohrung 11 der Abtastwelle 5 eingesetzt. Die Abtastwelle 5 ist über eine Steckkupplung 12 mit einer Potentiometerwelle 13 verbunden; deshalb dient die Rückstellfeder 8 auch als Rücksteller für das von der Potentiometerwelle 13 verstellbare Potentiometer 7. Das Potentiometer 7 ist Signalgeber für einen Signalempfänger 9, der als Magnetventil ausgebildet ist und in einer zu Radbremszylindern 16 führenden Bremsleitung 17 angeordnet ist.

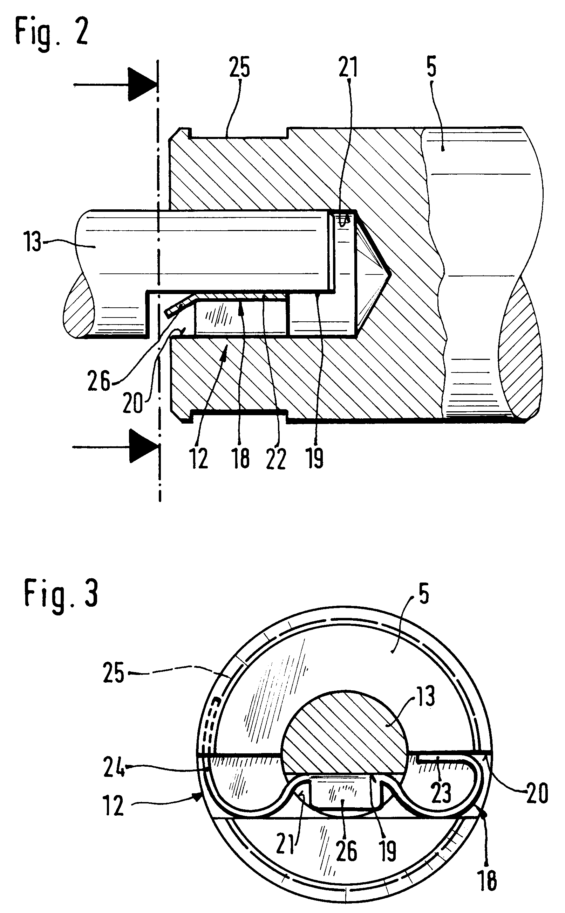

In den Schnittbildern nach den Figuren 2 und 3 ist zu erkennen, daß die Steckkupplung 12 zwischen Abtastwelle 5 und Potentiometerwelle 13 durch eine als Zwischenteil ausgebildete Blattfeder 18 und eine Abflachung 19 am Ende der Potentiometerwelle 13 und einen Querdurchbruch 20 in der Abtastwelle 5 gebildet ist. Letztere ist mit einer Sackbohrung 21 versehen, die zur Aufnahme des abgeflachten Endes der Potentiometerwelle 13 bestimmt ist.

Die Blattfeder 18 weist ein Mittelstück 22 auf, mit dem sie unter Vorspannung fest auf der Abflachung 19 aufliegt. An ihren beiden Enden ist die Blattfeder 18 umgebogen, wobei das eine Ende 23 um 180° umgebogen und in dem Querdurchbruch 20 klammerartig verspannt ist, während das andere Ende 24 eine Krümmung aufweist, die der Form einer Außenringnut 25 der Abtastwelle 5 entspricht. Mit diesem gekrümmten Ende 24 ist die Blattfeder 18 in die Außenringnut 25 eingelegt. Dadurch ist die Blattfeder 18 in axialer Richtung festgelegt. Das Mittelstück 22 hat eine nach außen weisende Einfädel-Aufgleitzunge 26, die dazu bestimmt ist, nach der Montage der Blattfeder 18 in dem Querdurchbruch 20 die Potentiometerwelle 13 mit ihrer Abflachung 19 in die Blattfeder 18 in radialer Richtung einzudrücken und damit die Steckkupplung 12 zu kuppeln.

Es ist zu bemerken, daß die Verbindung der Kupplung 12 lediglich durch radiales Eindrücken der Potentiometerwelle 13 entsteht. Durch die Vorspannung und die Verspannung der Blattfeder 18 in dem Querdurchbruch 20 ist auf diese Weise eine völlig spielfreie Kupplung zwischen dem Potentiometer 7 und der Abtastwelle 5 geschaffen; dies auch deshalb, weil sich die Potentiometerwelle 13 sehr leicht drehen läßt.

## Patentansprüche

1. Lastabhängige Bremskraftregeleinrichtung mit einer Abtastvorrichtung (Hebel 3) für den bei Lastveränderungen wechselnden Abstand zwischen Fahrzeugachse (1) und Aufbau (2), ferner mit einem von der Abtastvorrichtung mittels seiner Welle (13) verstellbaren Dreh-Potentiometer (7) als Signalgeber und mit einem Signalempfänger (9), der die Bremskraft entsprechend der wechselnden Fahrzeugbelastung einstellt, dadurch gekennzeichnet, daß das Dreh-Potentiometer (7) von einer Abtastwelle (5) der Abtastvorrichtung (Hebel 3) verstellbar ist und daß zwischen der drehbaren Abtastwelle (5) und der gleichachsig angeordneten Potentiometerwelle (13) als Verbindungselement eine Steckkupplung (12) vorgesehen ist.

2. Bremskraftregeleinrichtung nach Anspruch 1, dadurch gekennzeichnet, daß die Abtastwelle (5) eine Sackbohrung (21) zur Aufnahme des freien Endes der Potentiometerwelle (13) aufweist und ein Zwischenteil der Steckkupplung (12) eine Blattfeder (18) ist, die mit in Umfangsrichtung und in Radialrichtung wirkender Vorspannung zwischen eine Abflachung (19) der Potentiometerwelle (13) und einen Querdurchbruch (20) der Abtastwelle (5) eingesetzt ist.

3. Bremskraftregeleinrichtung nach Anspruch 1 oder 2, dadurch gekennzeichnet, daß die Blattfeder (18) mit einem Mittelstück (22) auf der Abflachung (19) der Potentiometerwelle (13) aufliegt und an ihren beiden Enden (23, 24) umgebogen ist.

4. Bremskraftregeleinrichtung nach Anspruch 3, dadurch gekennzeichnet, daß das eine Ende (23) der Blattfeder (18) um 180° gebogen und im Querdurchbruch (20) klammerartig verspannt ist und daß das andere Ende (24) der Blattfeder (18) eine Krümmung entsprechend der Form einer Außenringnut (25) der Abtastwelle (5) aufweist und in die Ringnut (25) eingelegt ist.

5. Bremskraftregeleinrichtung nach Anspruch 3 oder 4, dadurch gekennzeichnet, daß die Blattfeder (18) an ihrem zur Anlage an der Abflachung (19) der Potentiometerwelle (13) bestimmten Mittelstück (22) eine nach außen weisende Einfädel-Aufgleitzunge (26) als Montagehilfe für die Steckkupplung (12) aufweist.

## Claims

1. Load-dependent braking force control device having a scanning device (lever 3) for the distance, changing with load variations, between the vehicle axis (1) and body (2), further having, as signal transmitter, a rotary potentiometer (7) which can be adjusted by means of its shaft (13) by the scanning device, and having a signal receiver (9) which adjusts the changing vehicle load in accordance with the braking force, characterised in that the rotary potentiometer (7) can be adjusted by a scanning shaft (5) of the scanning device (lever 3), and in that a plug-in connector (12) is provided as connecting element between the rotary scanning shaft (5) and the uniaxially arranged potentiometer shaft (13).

2. Braking force control device according to Claim 1, characterised in that the scanning shaft (5) has a blind bore (21) for accommodating the free end of the potentiometer shaft (13), and an intermediate part of the plug-in connector (12) is a leaf spring (18) which is inserted between a flat (19) of the potentiometer shaft (13) and a transverse cut-out (20) of the scanning shaft (5) under pretensioning acting in the circumferential direction and in the radial direction.

3. Braking force control device according to Claim 1 or 2, characterised in that the leaf spring (18) rests with a middle piece (22) on the flat (19) of the potentiometer shaft (13) and is bent over at both its ends (23, 24).

4. Braking force control device according to Claim 3, characterised in that one end (23) of the leaf spring (18) is bent by 180° and braced like a bracket in the transverse cut-out (20), and in that the other end (24) of the leaf spring (18) has a curvature corresponding to the shape of an outer ring groove (25) of the scanning shaft (5) and is inserted into the ring groove (25).

5. Braking force control device according to Claim 3 or 4, characterised in that on its middle piece (22) intended for bearing against the flat (19) of the potentiometer shaft (13) the leaf spring (18) has an outwardly pointing slide-on threading tongue (26) as installation aid for the plug-in connector (12).

## Revendications

1. Installation de régulation de la force d'un frein en fonction d'une charge comportant un dispositif de détection (levier 3) de la distance variable en fonction de la charge, entre l'essieu (1) et la carrosserie (2) du véhicule, avec un potentiomètre tournant (7) réglé par le dispositif de détection par l'intermédiaire de son axe (13) et constituant un générateur de signal, ainsi qu'un récepteur de signal (9) qui règle la force du frein en fonction de la charge variable du véhicule, installation caractérisée en ce que le potentiomètre rotatif (7) est réglable par l'axe de détection (5) du dispositif de détection (levier 3) et en ce qu'entre l'axe de détection réglable (5) et l'axe (13) du potentiomètre disposés coaxialement, l'élément de liaison est constitué par une liaison à emboîtage (12).

2. Installation de régulation de la force de frein selon la revendication 1, caractérisée en ce que l'axe de détection (5) comporte un trou borgne (21) pour recevoir l'extrémité libre de l'axe (13) du potentiomètre tandis que la liaison à emboîtage (12) comprend une pièce intermédiaire constituée par un ressort-lame (18) placée avec une précontrainte agissant dans la direction périphérique et dans la direction radiale, entre un méplat (19) de l'axe (13) du potentiomètre et un perçage traversant (20) de l'axe de détection (5).

3. Installation de régulation de la force d'un frein selon la revendication 1 ou 2, caractérisé en ce que le ressort-lame (18) s'appuie sur le méplat (19) de l'axe (13) du potentiomètre par une partie mediane (22), les extrémités (23, 24) du ressort-lame étant recourbées.

4. Installation de régulation de la force de freinage selon la revendication 3, caractérisé en ce qu une extrémité (23) du ressort-lame (18) est recourbée à 180° et est serrée à la manière d'une pince dans le perçage traversant (20) tandis que l'autre extrémité (24) du ressort-lame (18) comporte une zone courbe correspondant à la forme de la rainure annulaire extérieure (25) de l'axe de détection (5) qui est logée dans cette rainure annulaire (25).

5. Installation de régulation de la force de frein selon la revendication 3 ou 4, caractérisé en ce que le ressort-lame (18) comporte sur sa partie mediane (22), destinée à venir en appui contre le méplat (19) de l'axe (13) du potentiomètre, une languette d'attaque (26) d'enfilage, tournée vers l'extérieur et constituant une aide au montage pour la liaison par emboîtage (12).
